# EUROPÄISCHE PATENTSCHRIFT

(11) **EP 3 586 164 B1**
(45) Veröffentlichungstag und Bekanntmachung des Hinweises auf die Patenterteilung: **10.03.2021**
(21) Anmeldenummer: 18700727.3
(22) Anmeldetag: 11.01.2018
(51) Int. Cl.: G01S 15/93, G01H 3/00, G01S 7/52

(54) **SENSORVORRICHTUNG MIT EINEM SENSOR ZUM DURCHFÜHREN EINER UMFELDERFASSUNG MITTELS SCHALLWELLEN**
SENSOR DEVICE COMPRISING A SENSOR FOR DETECTING SURROUNDINGS BY MEANS OF SOUND WAVES
DISPOSITIF DE DÉTECTION MUNI D'UN CAPTEUR POUR EFFECTUER UNE DÉTECTION D'ENVIRONNEMENT AU MOYEN D'ONDES SONORES

(30) Priorität: 27.02.2017 DE 102017203136
(43) Veröffentlichungstag der Anmeldung: 01.01.2020
(73) Patentinhaber: Robert Bosch GmbH, 70442 Stuttgart (DE)
(72) Erfinder: REICHE, Martin, 71263 Weil Der Stadt (DE); FRANK, Michael, 75015 Bretten (DE); SCHMID, Dirk, 75397 Simmozheim (DE); RICHTER, Karl-Heinz, 71263 Weil Der Stadt (DE); PREISSLER, Peter, 36460 Dorndorf (DE)
(86) Internationale Anmeldenummer: PCT/EP2018/050654
(87) Internationale Veröffentlichungsnummer: WO 2018/153562

(56) Entgegenhaltungen:
- EP-A1- 2 899 563
- WO-A1-2008/141663
- DE-A1-102008 042 820
- US-A1- 2008 319 692

## Beschreibung

Die vorliegende Erfindung betrifft eine Sensorvorrichtung, die einen Sensor zum Aussenden von Schallwellen und zum Durchführen einer Umfelderfassung mittels der Schallwellen umfasst. Die Sensorvorrichtung umfasst ferner eine Überwachungseinheit zum Messen einer Impedanz des Sensors. Die Erfindung betrifft ferner ein Verfahren zum Überwachen eines Sensors einer derartigen Sensorvorrichtung.

### Stand der Technik

Das Dokument DE 10 2008 042 820 A1 beschreibt eine Sensorvorrichtung, die einen Sensor zum Durchführen einer Umfelderfassung mittels Schallwellen umfasst. Der Sensor weist Mittel zur Erzeugung und Detektion von Schallwellen auf. Die Sensorvorrichtung umfasst ferner eine Funktionsüberwachungsvorrichtung zum Prüfen eines Funktionszustandes des Sensors mittels einer Impedanzkennlinie des Sensors. Die Funktionsüberwachungsvorrichtung ist dazu ausgelegt, eine Imedanzmessung durchzuführen, bei der die Impedanzkennlinie des Sensors in Abhängigkeit einer Anregungsfrequenz ermittelt wird. Während der Impedanzmessung wird der Sensor mit einer kleineren Amplitude als während eines Normalbetriebs des Sensors angeregt.

Das Dokument EP 2899563 A1 offenbart ein Verfahren und eine Vorrichtung zur Erkennung einer Fehlfunktion eines Ultraschallwandlers. Das Verfahren umfasst die Schritte eines Beaufschlagens des Ultraschallwandlers mit einem Anregungssignal, eines Ermitteln eines Impedanzsignals, welches die Impedanz des Ultraschallwandlers hinsichtlich des Anregungssignals beschreibt, eines Erzeugen einer Impedanz-Hüllkurve des Impedanzsignals, und eines Vergleichens der Impedanz-Hüllkurve mit einer Referenz-Hüllkurve, wobei eine Fehlfunktion detektiert wird, wenn die Impedanz-Hüllkurve ungleich der Referenz-Hüllkurve ist. Insbesondere umfasst das Anregungssignal dabei mehrere Frequenzen, insbesondere einen Sweep, wodurch das Verfahren auch während eines Sendebetriebes des Ultraschallwandlers ausgeführt werden kann.

### Offenbarung der Erfindung

Erfindungsgemäß wird eine Sensorvorrichtung mit einem Sensor, einem Signalgenerator und einer Überwachungseinheit bereitgestellt. Dabei umfasst der Sensor einen Schallwandler und eine Auswerteeinheit. Der Schallwandler ist dazu ausgebildet, Schallwellen infolge einer Anregung mit mittels des Signalgenerators erzeugten elektrischen Anregungssignalen auszusenden und empfangene Schallwellen in elektrische Signale umzuwandeln. Die Auswerteeinheit des Sensors ist dazu ausgebildet, während eines Normalbetriebs des Sensors eine Umfelderfassung mittels einer Auswertung von elektrischen Signalen des Schallwandlers durchzuführen. Die Überwachungseinheit ist dazu ausgebildet, während eines Überwachungsbetriebes des Sensors eine Impedanz des Schallwandlers für unterschiedliche Anregungsfrequenzen der Anregungssignale zu messen. Die Sensorvorrichtung umfasst einen ersten Signalpfad, der mit dem Schallwandler verbunden und mit dem Signalgenerator verbindbar ist. Die Sensorvorrichtung umfasst ferner einen zweiten Signalpfad, der mit dem Schallwandler verbunden und mit dem Signalgenerator verbindbar ist. Die Sensorvorrichtung umfasst weiterhin eine erste Steuereinheit, die dazu ausgebildet ist, zum Versetzen des Sensors von dem Normalbetrieb in den Überwachungsbetrieb den ersten Signalpfad von dem Signalgenerator zu entkoppeln und den zweiten Signalpfad mit dem Signalgenerator zu verbinden.

Mit anderen Worten ist der Schallwandler während des Normalbetriebes über den ersten Signalpfad und während des Überwachungsbetriebes über den zweiten Signalpfad mit dem Signalgenerator verbunden. Dadurch, dass der Schallwandler während des Überwachungsbetrieb über einen anderen Signalpfad als während des Normalbetriebes mit dem Signalgenerator verbunden wird, kann eine Optimierung einer während des Überwachungsbetriebes durchzuführenden Impedanzmessung erzielt werden. Bei der genannten Impedanzmessung wird die Impedanz des Schallwandlers für unterschiedliche Anregungsfrequenzen der Anregungssignale gemessen. Diese Optimierung kann durch Auswahl einer geeigneten Konfiguration des zweiten Signalpfades erreicht werden. Die Konfiguration des zweiten Signalpfades kann gezielt auf die während des Überwachungsbetriebes durchzuführende Impedanzmessung angepasst werden, ohne dass dabei eine Berücksichtigung von Anforderungen erfolgen muss, die während einer im Normalbetrieb durchgeführten Umfelderfassung bestehen.

Die zuvor beschriebene Sensorvorrichtung kann mehrere Sensoren aufweisen, der jeweils in gleicher Weise wie der zuvor beschriebene Sensor in der Sensorvorrichtung vorgesehen sind.

Gemäß einer bevorzugten Weiterbildung der Erfindung stellen der erste Signalpfad und der zweite Signalpfad einer zuvor beschriebenen Sensorvorrichtung zwei vollständig voneinander unterschiedliche Signalpfade dar. Durch Auswahl von völlig unterschiedlichen Konfigurationen für die zwei Signalpfade kann erreicht werden, dass eine Amplitude der Anregungssignale während des Überwachungsbetriebes und folglich auch während der Impedanzmessung unabhängig von der Amplitude der Anregungssignale während des Normalbetriebes und folglich auch während der Umfelderfassung eingestellt werden kann. So kann sich die Amplitude der Anregungssignale während der Impedanzmessung um eine oder mehrere Größenordnungen beziehungsweise Zehnerpotenzen von der Amplitude der Anregungssignale während der Umfelderfassung unterscheiden. Insbesondere kann die Konfiguration des zweiten Signalpfads so ausgewählt werden, dass die Amplitude der Anregungssignale während des Überwachungsbetriebes um eine oder mehrere Größenordnungen beziehungsweise Zehnerpotenzen kleiner als die Amplitude der Anregungssignale während des Normalbetriebes ist. Hier ist zu berücksichtigen, dass eine Größenordnung einer Zehnerpotenz entspricht.

Im erfindungsgemäßen Fall, in dem die Amplitude der Anregungssignale während des Überwachungsbetriebes um wenigstens eine Größenordnung beziehungsweise Zehnerpotenz kleiner als die Amplitude der Anregungssignale während des Normalbetriebes ist, wird verhindert, dass während der Impedanzmessung Schallwellen mit signifikanter Leistung ausgesendet werden. Auf diese Weise wird verhindert, dass die während der Impedanzmessung ausgesendeten Schallwellen den Normalbetrieb eines oder mehrerer benachbarter Sensoren stören. Mit anderen Worten, wird auf diese Weise ermöglicht, dass die Impedanzmessung in einem oder mehreren Sensoren einer zuvor beschriebenen Sensorvorrichtung zu dem gleichen Zeitpunkt durchgeführt werden kann, zu dem ein oder mehrere benachbarte Sensoren der jeweiligen Sensorvorrichtung Schallwellen zur Umfelderfassung aussenden.

Gemäß einer bevorzugten Weiterbildung der Erfindung umfasst eine zuvor beschriebene Sensorvorrichtung ein Schaltelement, das einen ersten und einen zweiten Schaltzustand aufweist und mittels der ersten Steuereinheit in den ersten und zweiten Schaltzustand versetzbar ist. Das Schaltelement ist dazu ausgebildet, in dem ersten Schaltzustand den ersten Signalpfad mit dem Signalgenerator zu verbinden und in dem zweiten Schaltzustand den zweiten Signalpfad mit dem Signalgenerator zu verbinden. Dadurch kann in einfacher Weise zwischen dem Normalbetrieb und dem Überwachungsbetrieb geschaltet werden.

Erfindungsgemäß weist der zweite Signalpfad einer zuvor beschriebenen Sensorvorrichtung eine Impedanzendstufe und einen Widerstand auf. Auf diese Weise kann der zweite Signalpfad durch den Einsatz von wenigen kostengünstigen Bauelementen realisiert werden, die größtenteils in einer ohnehin in der jeweiligen Sensorvorrichtung vorhandenen anwendungsspezifischen integrierten Schaltung, die auch als ASIC bezeichnet wird, integriert werden können.

Gemäß einer bevorzugten Weiterbildung der Erfindung ist ein Eingang der Impedanzendstufe des zweiten Signalpfades einer zuvor beschriebenen Sensorvorrichtung mit dem Signalgenerator verbindbar. Ferner ist ein Ausgang derselben Impedanzendstufe über den Widerstand des zweiten Messpfades der jeweiligen Sensorvorrichtung mit dem Schallwandler verbunden.

Erfindungsgemäß ist der Wiederstand des zweiten Signalpfades einer zuvor beschriebenen Sensorvorrichtung hochohmig ausgeführt und weist bevorzugt einen Widerstandswert von mindestens 1•10⁵ Ω auf. Bevorzugt weist der Widerstand des zweiten Signalpfades einen Widerstandswert von 2•10⁵ Ω auf.

Im erfindungsgemäßen Fall, in dem der Widerstand des zweiten Signalpfades einer zuvor beschriebenen Sensorvorrichtung hochohmig ausgeführt ist, kann über den zweiten Signalpfad nur ein Strom mit sehr geringen Stromwerten fließen. Je nach Auswahl des Widerstandswertes des hochohmig ausgeführten Widerstandes kann erreicht werden, dass eine Amplitude der mittels des Signalgenerators erzeugten Anregungssignale während des Überwachungsbetriebes kleiner, insbesondere um eine oder mehrere Größenordnungen beziehungsweise Zehnerpotenzen kleiner, als während des Normalbetriebes ist. Dadurch wird eine signifikante Schallabstrahlung während des Überwachungsbetriebes und folglich auch während der Impedanzmessung verhindert.

Dadurch, dass der Widerstand des zweiten Signalpfades einer zuvor beschriebenen Sensorvorrichtung hochohmig ausgeführt ist und folglich nur ein Strom mit sehr geringen Stromwerten über den zweiten Signalpfad fließen kann, wird die Impedanzendstufe des zweiten Signalpfades einer zuvor beschriebenen Sensorvorrichtung nur sehr wenig belastet. Folglich kann die Impedanzendstufe sehr klein ausgeführt werden. Ferner wird ein von der Überwachungseinheit einer zuvor beschriebenen Sensorvorrichtung bevorzugt umfasster Eingangsverstärker zum Verstärken einer an dem Schallwandler anliegenden Spannung nicht übersteuert. Weiterhin kann der Normalbetrieb des Sensors nicht durch den zweiten Signalpfad beeinflusst werden, da über den zweiten Signalpfad nur ein parasitärer Strom mit sehr geringen Stromwerten fließen kann.

Erfindungsgemäß umfasst eine zuvor beschriebene Sensorvorrichtung eine zweite Steuereinheit. Die zweite Steuereinheit ist dazu ausgebildet, den Signalgenerator so zu steuern, dass die mittels des Signalgenerators erzeugten Anregungssignale während des Überwachungsbetriebes jeweils eine kleinere Amplitude, insbesondere eine um wenigstens eine Größenordnung beziehungsweise Zehnerpotenz kleinere Amplitude, als während des Normalbetriebes aufweisen.

Ein weiterer Aspekt der Erfindung betrifft ein Verfahren zum Überwachen eines Funktionszustandes eines Sensors einer zuvor beschriebenen Sensorvorrichtung. Das Verfahren umfasst ein Versetzen des Sensors von dem Normalbetrieb in den Überwachungsbetrieb durch Entkoppeln des ersten Signalpfades von dem Signalgenerator und Verbinden des zweiten Signalpfades mit dem Signalgenerator. Das Verfahren umfasst ferner ein Messen der Impedanz des Schallwandlers für unterschiedliche Anregungsfrequenzen der mittels des Signalgenerators erzeugten Anregungssignale.

Erfindungsgemäß umfasst das zuvor beschriebene Verfahren ein derartiges Steuern des Signalgenerators, dass die mittels des Signalgenerators erzeugten Anregungssignale während des Überwachungsbetriebes jeweils eine kleinere Amplitude, insbesondere eine um wenigstens eine Größenordnung beziehungsweise Zehnerpotenz kleinere Amplitude, als während des Normalbetriebes aufweisen.

### Kurze Beschreibung der Zeichnung

Nachfolgend wird ein Ausführungsbeispiel der Erfindung unter Bezugnahme auf die begleitende Zeichnung im Detail beschrieben. Für gleiche Komponenten werden jeweils gleiche Bezugszeichen verwendet. In der Zeichnung ist:

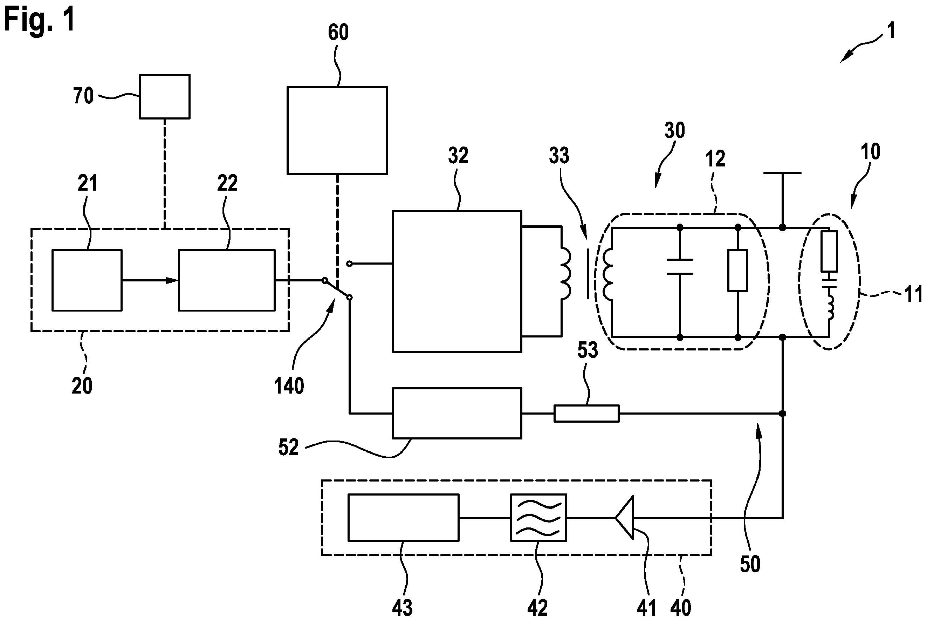

- Figur 1: ein Blockschaltbild einer Sensorvorrichtung gemäß einer ersten Ausführungsform der Erfindung.

### Ausführungsform der Erfindung

Figur 1 zeigt ein Blockschaltbild einer Sensorvorrichtung 1 gemäß einer ersten Ausführungsform der Erfindung. Die Sensorvorrichtung 1 umfasst einen Sensor mit einem Schallwandler 10 und eine Auswerteeinheit (nicht dargestellt). Die Sensorvorrichtung 1 umfasst ferner einen Signalgenerator 20 und einen ersten Signalpfad 30. Der Schallwandler 10 ist dazu ausgebildet ist, Schallwellen infolge einer Anregung mit mittels des Signalgenerators 20 erzeugten elektrischen Anregungssignalen auszusenden und empfangene Schallwellen in elektrische Signale umzuwandeln. Die Auswerteeinheit des Sensors ist dazu ausgebildet, während eines Normalbetriebs des Sensors, in dem der Schallwandler 10 über einen ersten Signalpfad 30 der Sensorvorrichtung 1 mit dem Signalgenerator 20 verbunden ist, eine Umfelderfassung mittels einer Auswertung von elektrischen Signalen des Schallwandlers 10 durchzuführen.

Der erste Signalpfad 30 ist mit dem Schallwandler 10 verbunden und über einen in der Sensorvorrichtung 1 angeordneten Schalter 140 mit dem Signalgenerator 20 verbindbar. Der erste Signalpfad 30 umfasst eine-Leistungsendstufe 32 und einen Transformator 33. Dabei ist ein Eingang der Leistungsendstufe 32 über dem Schalter 140 mit dem Signalgenerator 20 verbindbar. Ferner ist ein Ausgang der Leistungsendstufe 32 über den Transformator 33 mit dem Schallwandler 10 verbunden.

Der Schallwandler 10 kann in einem Ersatzschaltbild als Serienschwingkreis 11 dargestellt werden. Ferner kann eine elektrische Beschaltung des Schallwandlers 10 als Parallelschwingkreis 12, über den der Serienschwingkreis 11 mit dem Transformator 33 verbunden ist, dargestellt werden. Dabei ist der Serienschwingkreis 11 parallel zu dem Parallelschwingkreis 12 geschaltet.

Der Signalgenerator 20 umfasst einen Oszillator 21 zur Erzeugung einer erforderlichen Anregungsfrequenz und einen Frequenzteiler 22 zur Erzeugung unterschiedlicher Anregungsfrequenzen der Anregungssignale. Dabei ist ein Eingang des Frequenzteilers 22 mit dem Oszillator 21 verbunden. Ferner ist ein Ausgang des Frequenzteilers 22 über den Schalter 140 mit der Leistungsendstufe 32 des ersten Signalpfades 30 verbindbar.

Ferner umfasst die Sensorvorrichtung 1 eine Überwachungseinheit 40, die dazu ausgebildet ist, während eines Überwachungsbetriebes des Sensors, in dem der Schallwandler 10 über einen zweiten Signalpfad 50 der Sensorvorrichtung 1 mit dem Signalgenerator 20 verbunden ist, eine Impedanzmessung durchzuführen. Während der Impedanzmessung wird mittels der Überwachungseinheit 40 eine Impedanz des Schallwandlers 10 für unterschiedliche Anregungsfrequenzen der mittels des Signalgenerators 20 erzeugten Anregungssignale gemessen. Dazu umfasst die Überwachungseinheit 40 einen Eingangsverstärker 41, einen nachgeschalteten Bandpassfiter 42 und eine nachfolgende Auswerteeinheit 43. Dabei ist ein Eingang des Eingangsverstärkers 41 mit dem Schallwandler 10 verbunden. Ferner ist ein Ausgang des Eingangsverstärkers 41 über den Bandpassfilter 42 mit der Auswerteeinheit 43 der Überwachungsvorrichtung 40 verbunden.

Zum Durchführen der Impedanzmessung des Schallwandlers wird eine am Schallwandler 10 anliegende Spannung gemessen. Dazu wird ein Abgriff in dem Serienschwingkreis 11 des Schallwandlers 10 gebildet. Ferner wird die an dem Schallwandler 10 anliegende Spannung über den Eingangsverstärker 41 und den Bandpassfilter 42 der Auswerteeinheit 43 der Überwachungsvorrichtung 40 bereitgestellt. Ein Spannungswert dieser Spannung wird dann mittels der Auswerteeinheit 43 der Überwachungsvorrichtung 40 ermittelt. Die Impedanz des Schallwandlers 10 wird dann als Quotienten zwischen dem ermittelten Spannungswert und einem bekannten Stromwert eines durch den Schallwandler 10 fließenden Stroms berechnet.

Der zweite Signalpfad 50 ist mit dem Schallwandler 10 verbunden und über den Schalter 140 mit dem Signalgenerator 20 verbindbar. Der zweite Signalpfad 50 umfasst eine Impedanzendstufe 52 und einen Widerstand 53. Dabei ist ein Eingang der Impedanzendstufe 52 über den Schalter 140 mit dem Signalgenerator 20 verbindbar. Ferner ist ein Ausgang der Impedanzendstufe 52 über den Widerstand 53 mit dem Schallwandler 10 verbunden.

Der Schalter 140 weist eine erste Schaltposition auf, in welcher der Signalgenerator 20 mit dem ersten Signalpfad 30 verbunden ist und von dem zweiten Signalpfad 50 abgekoppelt ist. Der Schalter 140 weist ferner eine zweite Schaltposition auf, in welcher der Signalgenerator 20 von dem ersten Signalpfad 30 abgekoppelt ist und mit dem zweiten Signalpfad 50 verbunden ist.

Die Sensorvorrichtung 1 umfasst eine erste Steuereinheit 60, die dazu ausgebildet ist, zum Versetzen des Sensors von dem Normalbetrieb in den Überwachungsbetrieb den Schalter 140 von der ersten Schaltposition in die zweite Schaltposition zu schalten und dadurch den Signalgenerator 20 von dem ersten Signalpfad 30 zu entkoppeln und mit dem zweiten Signalpfad 50 zu verbinden.

Zur Aktivierung des Überwachungsbetriebes beziehungsweise der Impedanzmessung wird mittels der ersten Steuereinheit 60 ein Schaltsignal erzeugt, das den Frequenzteiler 22 des Signalgenerators 20 von dem Eingang der Leistungsendstufe 32 des ersten Signalpfades 30 trennt und auf den Eingang der Impedanzendstufe 52 des zweiten Signalpfades 50 leitet.

Die erste Steuereinheit 60 ist ferner dazu ausgebildet, zum Versetzen des Sensors von dem Überwachungsbetrieb in den Normalbetrieb den Schalter 140 von der zweiten Schaltposition in die erste Schaltposition zu schalten und dadurch den Signalgenerator 20 von dem zweiten Signalpfad 50 zu entkoppeln und mit dem ersten Signalpfad 30 zu verbinden.

Die erste Steuereinheit 60 kann in einer auch als ASIC bezeichneten anwendungsspezifischen integrierten Schaltung, die in der Sensorvorrichtung 1 bereits vorhanden ist, integriert werden.

Bei der vorliegenden Erfindung wird zur Erzeugung der Anregungssignale während des Überwachungsbetriebes und folglich während der Impedanzmessung nicht der während des Normalbetriebes einzusetzende erste Signalpfad 30 verwendet, der die Leistungsendstufe 32 mit nachgeschaltetem Transformator 33 umfasst. Bei der vorliegenden Erfindung wird zur Erzeugung der Anregungssignale während des Überwachungsbetriebes und folglich während der Impedanzmessung die Impedanzendstufe 52 des zweiten Signalpfades 50 benutzt, deren Ausgang über den Widerstand 53 direkt mit dem Schallwandler 10 verbunden ist.

Die Impedanzendstufe 52 des zweiten Signalpfades 50 wird bevorzugt in einer sich ergänzenden Metall-Oxid-Halbleiter verwendenden Technologie, die auch als CMOS-Technologie bezeichnet wird, ausgeführt und kann leicht in einem ASIC integriert werden. Der Widerstand 53 wird bevorzugt hochohmig ausgeführt und sein Wert kann circa 2 • 10⁵ Ω betragen. Typische Spannungswerte einer Ausgangsspannung des so realisierten zweiten Signalpfades 50 liegen in einem sich zwischen 0 V und 5 V erstreckenden Wertebereich. Typische Stromwerte eines durch den so realisierten zweiten Signalpfad 50 fließenden Stroms liegen unter einem Wert von 1• 10⁻⁴ A und könnten nicht mit der Leistungsendstufe 32 des ersten Signalpfades 30 in Kombination mit dem Transformator 33 erzeugt werden. Die Verwendung eines zweiten Signalpfades 50, der nur von einem Strom mit so geringen Stromwerten durchflossen werden kann, bringt mehrere Vorteile mit sich. Ein erster dieser Vorteile besteht darin, dass während des Überwachungsbetriebes und folglich auch während der Impedanzmessung eine signifikante Schallabstrahlung verhindert wird. Ein zweiter dieser Vorteile besteht darin, dass während des Überwachungsbetriebes und folglich auch während der Impedanzmessung der Eingangsverstärker 41 der Überwachungseinheit 40 nicht übersteuert wird. Ein dritter dieser Vorteile besteht darin, dass die Impedanzendstufe 52 des zweiten Signalpfades 50 nur sehr wenig belastet wird und deswegen sehr klein ausgelegt werden kann. Ein vierter dieser Vorteile besteht darin, dass der Normalbetrieb des Sensors nicht durch den zweiten Signalpfad 50 beeinflusst werden kann, da über den hochohmigen Widerstand 53 des zweiten Signalpfades 50 nur ein parasitärer Strom mit sehr geringem Stromwert fließen kann.

Bevorzugt kann die Sensorvorrichtung 1 eine zweite Steuereinheit 70 umfassen. Die zweite Steuereinheit 70 ist dazu ausgebildet ist, den Signalgenerator 20 so zu steuern, dass die mittels des Signalgenerators 20 erzeugten Anregungssignale während des Überwachungsbetriebes jeweils eine kleinere Amplitude als während des Normalbetriebes aufweisen. Dabei weisen die mittels des Signalgenerators 20 erzeugten Anregungssignale während des Überwachungsbetriebes jeweils insbesondere eine um wenigstens eine Größenordnung beziehungsweise Zehnerpotenz kleinere Amplitude als während des Normalbetriebes auf.

Neben der voranstehenden schriftlichen Offenbarung wird hiermit zur weiteren Offenbarung der Erfindung ergänzend auf die Darstellung in der Figur 1 Bezug genommen.

## Patentansprüche

1. Sensorvorrichtung (1) mit einem Sensor, einem Signalgenerator (20) und einer Überwachungseinheit (40), wobei ein Schallwandler (10) des Sensors dazu ausgebildet ist, Schallwellen infolge einer Anregung mit mittels des Signalgenerators (20) erzeugten elektrischen Anregungssignalen auszusenden und empfangene Schallwellen in elektrische Signale umzuwandeln, eine Auswerteeinheit des Sensors dazu ausgebildet ist, während eines Normalbetriebs des Sensors eine Umfelderfassung mittels einer Auswertung von elektrischen Signalen des Schallwandlers (10) durchzuführen, und die Überwachungseinheit (40) dazu ausgebildet ist, während eines Überwachungsbetriebes des Sensors eine Impedanz des Schallwandlers (10) für unterschiedliche Anregungsfrequenzen der Anregungssignale zu messen, weiter umfassend:
einen ersten Signalpfad (30) und einen zweiten Signalpfad (50), die jeweils mit dem Schallwandler (10) verbunden und mit dem Signalgenerator (20) verbindbar sind, und
eine erste Steuereinheit (60), die dazu ausgebildet ist, zum Versetzen des Sensors von dem Normalbetrieb in den Überwachungsbetrieb den ersten Signalpfad (30) von dem Signalgenerator (20) zu entkoppeln und den zweiten Signalpfad (50) mit dem Signalgenerator (20) zu verbinden,
**dadurch gekennzeichnet, dass** der zweite Signalpfad (50) eine Impedanzendstufe (52) und einen Widerstand (53) aufweist und dass ein Eingang der Impedanzendstufe (52) mit dem Signalgenerator (20) verbindbar ist und
ein Ausgang der Impedanzendstufe (52) über den Widerstand (53) mit dem Schallwandler (10) verbunden ist, wobei
der Widerstand (53) des zweiten Signalpfades (50) hochohmig ausgeführt ist und bevorzugt einen Widerstandswert von mindestens 1•10⁵ Ω aufweist, und wobei die Sensorvorrichtung (1) eine zweite Steuereinheit (70) umfasst, die dazu ausgebildet ist, den Signalgenerator (20) so zu steuern, dass die mittels des Signalgenerators (20) erzeugten Anregungssignale während des Überwachungsbetriebes jeweils eine um wenigstens eine Zehnerpotenz kleinere Amplitude, als während des Normalbetriebes aufweisen.

2. Sensorvorrichtung (1) nach Anspruch 1, **gekennzeichnet durch** ein Schaltelement (140), das einen ersten und einen zweiten Schaltzustand aufweist, mittels der ersten Steuereinheit (60) in den ersten und zweiten Schaltzustand versetzbar ist und dazu ausgebildet ist, in dem ersten Schaltzustand den ersten Signalpfad (30) mit dem Signalgenerator (20) zu verbinden und in dem zweiten Schaltzustand den zweiten Signalpfad (50) mit dem Signalgenerator (20) zu verbinden.

3. Verfahren zum Überwachen eines Funktionszustandes eines Sensors einer Sensorvorrichtung (1) nach einem der vorangehenden Ansprüche mit den Schritten:
Versetzen des Sensors von dem Normalbetrieb in den Überwachungsbetrieb durch Entkoppeln des ersten Signalpfades (30) von dem Signalgenerator (20) und Verbinden des zweiten Signalpfades (50) mit dem Signalgenerator (20),
und
Messen der Impedanz des Schallwandlers (10) für unterschiedliche Anregungsfrequenzen der mittels des Signalgenerators (20) erzeugten Anregungssignale, **gekennzeichnet durch**:
derartiges Steuern des Signalgenerators (20), dass die mittels des Signalgenerators (20) erzeugten Anregungssignale während des Überwachungsbetriebes jeweils eine kleinere Amplitude, insbesondere eine um wenigstens eine Zehnerpotenz kleinere Amplitude, als während des Normalbetriebes aufweisen.

## Claims

1. Sensor device (1) comprising a sensor, a signal generator (20) and a monitoring unit (40), wherein a sound transducer (10) of the sensor is configured to emit sound waves on account of excitation with electrical excitation signals generated by means of the signal generator (20) and to convert received sound waves into electrical signals, an evaluation unit of the sensor is configured to carry out detection of surroundings by means of an evaluation of electrical signals of the sound transducer (10) during normal operation of the sensor, and the monitoring unit (40) is configured to measure an impedance of the sound transducer (10) for different excitation frequencies of the excitation signals during monitoring operation of the sensor, further comprising:
a first signal path (30) and a second signal path (50), which are each connected to the sound transducer (10) and connectable to the signal generator (20), and
a first control unit (60) configured to decouple the first signal path (30) from the signal generator (20) and to connect the second signal path (50) to the signal generator (20) in order to switch the sensor from normal operation to monitoring operation,
**characterized in that** the second signal path (50) has an impedance output stage (52) and a resistor (53) and **in that** an input of the impedance output stage (52) is connectable to the signal generator (20) and an output of the impedance output stage (52) is connected to the sound transducer (10) via the resistor (53), wherein
the resistor (53) of the second signal path (50) is embodied with a high resistance and preferably has a resistance value of at least 1.10⁵ Ω, and wherein the sensor device (1) comprises a second control unit (70) configured to control the signal generator (20) such that the excitation signals generated by means of the signal generator (20), during monitoring operation, each have an amplitude which is smaller than that during normal operation by at least one power of ten.

2. Sensor device (1) according to Claim 1, **characterized by** a switching element (140), which has a first and a second switching state, is able to be switched to the first and second switching states by means of the first control unit (60) and is configured to connect the first signal path (30) to the signal generator (20) in the first switching state and to connect the second signal path (50) to the signal generator (20) in the second switching state.

3. Method for monitoring a functional state of a sensor of a sensor device (1) according to either of the preceding claims, comprising the following steps:
switching the sensor from normal operation to monitoring operation by decoupling the first signal path (30) from the signal generator (20) and connecting the second signal path (50) to the signal generator (20),
and
measuring the impedance of the sound transducer (10) for different excitation frequencies of the excitation signals generated by means of the signal generator (20), **characterized by**:
controlling the signal generator (20) in such a way that the excitation signals generated by means of the signal generator (20), during monitoring operation, each have an amplitude which is smaller than that during normal operation, in particular an amplitude which is smaller by at least one power of ten.

## Revendications

1. Dispositif de détection (1), comprenant un capteur, un générateur de signaux (20) et une unité de surveillance (40), dans lequel un transducteur acoustique (10) du capteur est réalisé pour émettre des ondes sonores suite à une excitation par des signaux d'excitation électriques générés au moyen du générateur de signaux (20) et pour transformer des ondes sonores reçues en signaux électriques, une unité d'évaluation du capteur est réalisée, pendant un fonctionnement normal du capteur, pour effectuer une détection d'environnement au moyen d'une évaluation des signaux électriques du transducteur acoustique (10), et l'unité de surveillance (40) est réalisée, en mode surveillance du capteur, pour mesurer une impédance du transducteur acoustique (10) pour différentes fréquences d'excitation des signaux d'excitation, comprenant en outre :
un premier chemin de signal (30) et un deuxième chemin de signal (50) qui sont reliés respectivement au transducteur acoustique (10) et peuvent être reliés au générateur de signaux (20), et
une première unité de commande (60) qui est réalisée pour découpler le premier chemin de signal (30) du générateur de signaux (20) et pour relier le deuxième chemin de signal (50) au générateur de signaux (20) afin de faire passer le capteur du fonctionnement normal au mode surveillance,
**caractérisé en ce que** le deuxième chemin de signal (50) présente un étage final d'impédance (52) et une résistance (53), et **en ce qu'**une entrée de l'étage final d'impédance (52) peut être reliée au générateur de signaux (20) et une sortie de l'étage final d'impédance (53) est reliée au transducteur acoustique (10), dans lequel
la résistance (53) du deuxième chemin de signal (50) est réalisée à valeur ohmique élevée et présente de préférence une valeur de résistance d'au moins 1.10⁵ Ω, et
dans lequel le dispositif de détection (1) comprend une deuxième unité de commande (70) qui est réalisée pour commander le générateur de signaux (20) de telle sorte que les signaux d'excitation générés au moyen du générateur de signaux (20) en mode surveillance présentent respectivement une amplitude inférieure d'au moins une puissance de dix à celle du fonctionnement normal.

2. Dispositif de détection (1) selon la revendication 1, **caractérisé par** un élément de commutation (140) qui présente un premier et un deuxième état de commutation, qui peut être amené à passer au premier et au deuxième état de commutation au moyen de la première unité de commande (60), et qui est réalisé pour relier le premier chemin de signal (30) au générateur de signaux (20) dans le premier état de commutation, et pour relier le deuxième chemin de signal (50) au générateur de signaux (20) dans le deuxième état de commutation.

3. Procédé permettant de surveiller un état de fonctionnement d'un capteur d'un dispositif de détection (1) selon l'une quelconque des revendications précédentes, comprenant les étapes consistant à :
faire passer le capteur du fonctionnement normal au mode surveillance en découplant le premier chemin de signal (30) du générateur de signaux (20) et en reliant le deuxième chemin de signal (50) au générateur de signaux (20), et
mesurer l'impédance du transducteur acoustique (10) pour différentes fréquences d'excitation des signaux d'excitation générés au moyen du générateur de signaux (20), **caractérisé en ce que** :
le générateur de signaux (20) est commandé de telle sorte que les signaux d'excitation générés au moyen du générateur de signaux (20) présentent en mode surveillance respectivement une amplitude inférieure, en particulier une amplitude inférieure d'une puissance de dix, à celle du fonctionnement normal.
